# EUROPÄISCHE PATENTANMELDUNG

(11) **EP 2 966 764 A1**
(43) Veröffentlichungstag der Anmeldung: **13.01.2016**
(21) Anmeldenummer: 14176693.1
(22) Anmeldetag: 11.07.2014
(51) Int. Cl.: H02M 3/22, H02J 3/00, H02J 1/00

(54) **Dezentrale Energieversorgung**

(71) Anmelder: Reisinger, Erwin, 8073 Feldkirchen bei Graz (AT)
(72) Erfinder: Reisinger, Erwin, 8073 Feldkirchen bei Graz (AT)
(74) Vertreter: Wirnsberger, Gernot

(57) **Zusammenfassung**

Die Erfindung betrifft eine Schaltungsanordnung (1) zur Energieversorgung mehrerer Verbraucher, wobei diese voneinander beabstandet angeordnet sind, umfassend zumindest ein leitendes Übertragungsmittel (3), welches zumindest teilweise verlegt ist. Erfindungsgemäß ist dabei vorgesehen, dass ein Gleichrichter (4) zur Entnahme von Spannung aus dem Netz und zum Gleichrichten derselben und ein Mittel zur Frequenzänderung (5) von Spannung vorgesehen sind, wobei das zumindest eine leitende Übertragungsmittel (3) zwischen dem Mittel zur Frequenzänderung (5) und den Verbrauchern (2) überträgt.

Weiter umfasst die Erfindung eine Verwendung einer erfindungsgemäßen Schaltungsanordnung (1).

## Beschreibung

Die Erfindung betrifft eine Schaltungsanordnung zur Energieversorgung mehrerer Verbraucher, wobei diese voneinander beabstandet angeordnet sind, umfassend zumindest ein leitendes Übertragungsmittel, welches zumindest teilweise verlegt ist.

Weiter betrifft die Erfindung eine Verwendung einer solchen Schaltungsanordnung.

Systeme mit mehreren kleineren Verbrauchern sind aus dem Stand der Technik bekannt und sind in verschiedensten technischen Bereichen in Verwendung, wie beispielsweise im Logistik- oder Nutzfahrzeugbereich. Häufig müssen die Verbraucher mit Gleichspannung versorgt werden, im Industriebereich typischerweise mit einer Gleichspannung von 24 V. Um solche Verbraucher zu versorgen, wird Wechselspannung aus dem Netz in Gleichspannung umgewandelt. Oftmals sind bei solchen Systemen die Verbraucher voneinander beabstandet angeordnet, wobei ein Abstand zwischen Energiequelle und Verbraucher bzw. zwischen einzelnen Verbrauchern bis zu 100 m oder mehr betragen kann.

Bei einer solchen dementsprechend großen Ausdehnung eines Systems mit mehreren Verbrauchern entsteht ein beträchtlicher Aufwand für die Verkabelung bzw. zum Verbinden der Energiequelle mit den Verbrauchern. Hierzu werden meist Kupferkabel mit einem großen Querschnitt verwendet, um einen Spannungsfall und einen daraus resultierenden Verlust von elektrischer Energie beim Transport von Gleichspannung gering zu halten. In einem Leiter wird ein Produkt aus Strom und Spannungsfall als Wärmeenergie an diesen bzw. die Umgebung abgegeben. Da eine Stromstärke bzw. eine Spannung bei Gleichstrom nicht variierbar ist, muss der Spannungsfall so klein wie möglich gehalten werden. Da dieser mit einer Zunahme des Leiterquerschnittes sinkt, sind die Kupferkabel dick ausgebildet. Solche Kupferkabel mit großem Querschnitt sind aufgrund deren Größe bzw. Dicke teilweise schwer zu verbinden und zu verlegen. Darüber hinaus ist neben dem hohen Materialpreis von Kupferkabeln auch deren Verlegung teuer und zudem zeitaufwendig.

Es ist jedoch trotz des relativ guten Wirkungsgrades von Kupferkabeln mit großem Querschnitt ein Abstand zwischen Energiequelle bzw. einem Netzteil und Verbrauchern nicht beliebig groß wählbar, da der Spannungsfall zwar mit einer Vergrößerung des Querschnittes eines Kabels abnimmt, jedoch linear mit dessen Länge steigt. Um also einen Spannungsfall zumindest konstant zu halten, müsste ein Querschnitt eines Kabels mit dessen Länge immer größer gewählt werden, was technisch bzw. ökonomisch nicht umsetzbar ist.

Um diesen Nachteil zu verringern bzw. zu umgehen, werden in Systemen aus dem Stand der Technik meist mehrere Netzteile bzw. Gleichrichter eingesetzt, um einen Abstand zwischen je einem Netzteil und einem Verbraucher gering zu halten und somit einen Verlust von elektrischer Energie herabzusetzen. Die Verwendung mehrerer Netzteile hat jedoch den Nachteil, dass dabei auch eine aufwendigere Sicherheitstechnik notwendig ist, da jedes Netzteil einzeln abgesichert werden muss.

Aufgabe der Erfindung ist es, eine Schaltungsanordnung anzugeben, mit welcher mehrere voneinander beabstandet angeordnete Verbraucher mit möglichst wenig Verkabelungs- und Sicherungsaufwand sowie möglichst ohne Verlust von elektrischer Energie versorgbar sind.

Weiter ist es Aufgabe der Erfindung, eine Verwendung einer solchen Schaltungsanordnung anzugeben.

Die erste Aufgabe wird erfindungsgemäß dadurch gelöst, dass bei einer Schaltungsanordnung der eingangs genannten Art ein Gleichrichter zur Entnahme von Spannung aus dem Netz und zum Gleichrichten derselben und ein Mittel zur Frequenzänderung von Spannung vorgesehen sind, wobei das zumindest eine leitende Übertragungsmittel zwischen dem Mittel zur Frequenzänderung und den Verbrauchern überträgt.

Ein mit der Erfindung erzielter Vorteil ist insbesondere darin zu sehen, dass durch die Anordnung der einzelnen Komponenten mehrere dezentrale Verbraucher versorgbar sind, wobei eine Anzahl der Verbraucher dabei auch variabel sein kann. Die Anordnung der verschiedenen Komponenten zum Wandeln von Spannung erlaubt eine Übertragung dieser über weite Strecken, ohne dass eine aufwendige Kabelinstallation notwendig ist. Das Mittel zur Entnahme der Spannung aus dem Netz wandelt diese Wechselspannung in Gleichspannung um, bevorzugt in einen Bereich zwischen 350 V und 400 V. Über das Übertragungsmittel ist Spannung vom Mittel zur Frequenzänderung zu den Verbrauchern über weite Strecken mit möglichst geringem elektrischen Energieverlust übertragbar, da diese gleichzeitig in Wechselspannung umgewandelt wird. Dabei sind mehrere voneinander beabstandete Verbraucher mit nur einem Mittel zur Entnahme von Spannung aus dem Netz mit Spannung versorgbar. Mit besonderem Vorteil eignet sich die erfindungsgemäße Schaltungsanordnung zur Versorgung von dreiphasigen Verbrauchern.

Mit Vorteil können mehrere Mittel zum Auskoppeln von Spannung vorgesehen sein, wobei an jedem Mittel zum Auskoppeln von Spannung einer der Verbraucher anschließbar ist, wobei das leitende Übertragungsmittel zwischen dem Mittel zur Frequenzänderung und den Mitteln zum Auskoppeln von Spannung überträgt. Falls unterschiedliche Verbraucher, wie z. B. Gleichstrommotoren versorgt werden sollen, ist es günstig, wenn jedem Verbraucher je ein Mittel zum Auskoppeln von Spannung vorangeschaltet ist. Erfindungsgemäß kann vorgesehen sein, dass der Gleichrichter und das Mittel zur Frequenzänderung auf einer Primärseite der Schaltungsanordnung angeordnet sind und die Mittel zum Auskoppeln von Spannung auf einer Sekundärseite.

Gemäß dem Konzept der Erfindung, kann ein Abstand von zumindest zwei Verbrauchern um mindestens eine Größenordnung größer als zumindest ein Verbraucher selbst sein.

Vorteilhaft kann es sein, wenn ein Resonanzwandler zur Frequenzänderung vorgesehen ist, welcher die Frequenz bevorzugt in Mittelfrequenz erhöht. Im Resonanzwandler wird die Gleichspannung in Wechselspannung mit einer entsprechend hohen Frequenz umgewandelt, bevorzugt in einen Bereich zwischen 20 kHz und einigen 100 kHz. Der Resonanzwandler kann dabei annähernd sinusförmige Spannung sowie sinusförmigen Strom erzeugen. Denkbar ist jedoch auch rechteckförmige Spannung bzw. Strom. Mittelfrequenzen haben gegenüber Niederfrequenzen den Vorteil, dass die damit betriebenen Bauteile kleiner und somit leichter ausführbar sind. Dadurch sind diese Bauteile flexibler in deren Einsatzbereich. Ein Eisenkern eines Transformators kann beispielsweise bei zunehmender Frequenz bei gleichbleibender Leistungsübertragung kleiner bemessen werden.

Günstig ist es, wenn ein Übertrager vorgesehen ist, welcher die Spannung aus dem Resonanzwandler auskoppelt. Dieser schließt an den Resonanzwandler an und überträgt Spannung bzw. Strom weiter. Als Übertrager kann auch ein Transformator vorgesehen sein, mit welchem Spannung bzw. Energie sehr verlustarm übertragbar ist. Ein Übertrager überträgt darüber hinaus auch Informationen möglichst verlustfrei. Der Übertrager bzw. Transformator ist aufgrund der hochfrequenten Spannung geometrisch klein ausgebildet und beansprucht somit wenig Platz. Auch weist dieser durch die geringe Größe ein geringes Gewicht auf und ist somit flexibel einsetzbar. Der Übertrager kann über ein Übertragungsmittel Spannung zu Mitteln zum Auskoppeln von Spannung übertragen, wobei das Übertragungsmittel über eine Strecke von mehr als 0,5 m bis zu 100 m und mehr geführt sein kann. Das ist möglich, da nun Wechselspannung übertragen wird, welche entsprechend hoch gewählt ist, sodass bei gleichbleibender Leistung ein Strom niedrig gehalten werden kann. Mit einem geringen Strom ist auch ein Stromverlust über einen ohmschen Leitungswiderstand gering gehalten, wobei der Strom den Stromverlust bei gleichbleibender Leistung quadratisch erhöht. Somit muss, um einen Verlust von elektrischer Energie möglichst gering zu halten, nicht der Kabelquerschnitt erhöht werden, sondern lediglich die Spannung erhöht und somit der Strom erniedrigt werden, da ein Verlust von elektrischer Energie über das Produkt aus Strom und Spannungsfall bestimmt ist. Dadurch sind im Vergleich zum Stand der Technik einerseits Materialkosten und andererseits Verlegungskosten der Kabel sowie der elektronischen Bauteile herabgesetzt. Weiter ist auch ein Arbeitsaufwand beim Verlegen bzw. Verbinden der Kabel und der Bauteile erniedrigt, da dünne Kabel handlicher sind.

Besonders vorteilhaft ist es, wenn die Bauteile des Resonanzwandlers bei einem Nulldurchgang des Stromes oder der Spannung schalten, um einen elektrischen Energieverlust beim Schaltvorgang möglichst gering zu halten. Bevorzugt sind diese Bauteile steuerbar ausgeführt, beispielsweise als steuerbare Transistoren. Besonders gut eignen sich beispielsweise MOSFETs oder IGBTs. Neben den Transistoren kann der Resonanzwandler Kapazitäten und Induktivitäten umfassen, wobei alle Bauteile zusammen einen Schwingkreis bilden, welcher einen Bereich der Schaltfrequenz bestimmt.

Von Vorteil ist es, wenn ein Bussystem als Übertragungsmittel vorgesehen ist, welches an den Transformator anschließt, wobei Kabel des Bussystems teilweise verlegt sind. Das Bussystem besteht bevorzugt aus potenzialfreien Energieleitungen, mit welchen elektrische Energie möglichst verlustfrei über weite Strecken transportierbar ist.

Um mehrere dezentrale Verbraucher versorgen zu können, ist es vorteilhaft, wenn die Mittel zum Auskoppeln von Spannung parallel zueinander am Bussystem angeordnet, bevorzugt an dieses ansteckbar sind. Somit sind die Mittel zum Auskoppeln von Spannung und dadurch auch die Verbraucher jederzeit in einfacherweise ein- bzw. absteckbar und ein Betrieb einer variablen Anzahl von Verbrauchern ist möglich. Das Bussystem und die daran anbringbaren Mittel zum Auskoppeln von Spannung minimieren einen Installationsaufwand im Vergleich zu Systemen aus dem Stand der Technik beträchtlich.

Sind an den Mitteln zum Auskoppeln von Spannung Verbraucher angeordnet, welche mit Gleichspannung versorgt werden müssen, ist es günstig, wenn zumindest ein Mittel zum Auskoppeln von Spannung einen ausgangsseitigen Gleichrichter umfasst, um die über die Übertragungsmittel übertragene Wechselspannung wieder gleichzurichten. Durch den bzw. die ausgangsseitigen Gleichrichter ist somit bei den Verbrauchern wieder eine Gleichspannung von beispielsweise 24 V verfügbar. Als Verbraucher kann beispielsweise ein Motor, ein Sensor oder ein Ventil vorgesehen sein, wobei an jedem Mittel zum Auskoppeln von Spannung je ein anderer Verbraucher mit unterschiedlicher Last vorgesehen sein kann.

Dabei ist es besonders günstig, wenn Bauteile des ausgangsseitigen Gleichrichters bei einem Nulldurchgang des Stromes oder der Spannung schalten. Dadurch ist wiederum eine möglichst verlustfreie Wandlung des Stromes gewährleistet. Erfindungsgemäß können auch Bauteile vorgesehen sein, welche bei einem Nulldurchgang der Spannung schalten, um eine möglichst verlustfreie Wandlung dieser zu erreichen. Bevorzugt sind diese Bauteile steuerbar ausgeführt wie beispielsweise Transistoren. Wiederum eignen sich MOSFETs oder IGBTs als elektronische Schalter.

Alternativ kann vorteilhaft vorgesehen sein, dass zumindest ein Mittel zum Auskoppeln von Spannung einen ausgangsseitigen Umrichter umfasst. Solch ein ausgangsseitiger Umrichter ist nötig, wenn zumindest ein Verbraucher angeordnet ist, welcher mit Wechselspannung versorgt werden muss. Müssen mehrere Verbraucher mit Wechselspannung versorgt werden, umfasst jedes der Mittel zum Auskoppeln von Spannung, an welches solch ein Verbraucher anschließt, einen ausgangsseitigen Umrichter. Der ausgangsseitige Umrichter generiert aus der durch die Übertragungsmittel übertragenen Wechselspannung eine in einer Frequenz und/oder Amplitude unterschiedliche ein- oder mehrphasige Wechselspannung. Auch an jedem ausgangsseitigen Umrichter kann je eine andere Variante von Verbraucher anschließen, wobei die einzelnen Verbraucher auch mit unterschiedlicher Last betreibbar sind. Aus einem ausgangsseitigen Umrichter ist beispielsweise Spannung auskoppelbar, um damit eine Synchron- oder Asynchronmaschine zu versorgen.

Besonders vorteilhaft ist dabei wiederum vorgesehen, dass Bauteile des ausgangsseitigen Umrichters bei einem Nulldurchgang des Stromes oder der Spannung schalten, um Schaltverluste so gering wie möglich zu halten. Bevorzugt sind diese wiederum steuerbar ausgeführt. Besonders gut eignen sich dazu Transistoren, wie MOSFETs oder IGBTs.

Erfindungsgemäß kann vorgesehen sein, dass jeder Verbraucher in einem eigenen Gehäuse angeordnet ist. In diesem Fall können voneinander beabstandete Verbraucher versorgt werden, welche komplett unabhängig voneinander arbeiten.

Vorgesehen sein kann, dass zumindest an einem Mittel zum Wandeln von Spannung ein Motor anschließt. Es kann auch vorgesehen sein, dass an mehreren Mitteln zum Auskoppeln von Spannung oder an all diesen ein Motor als Verbraucher anschließt. Dabei können die Lasten der unterschiedlichen Motoren auch jeweils verschieden groß sein.

Vorteilhaft kann vorgesehen sein, dass die Last der Verbraucher unterschiedlich groß ist. Dabei regelt der Resonanzwandler die unterschiedlichen Spannungen, welche jeder Verbraucher beansprucht, entweder über die Frequenz oder über den Strom. Somit ist die Schaltungsanordnung für einen breiten Lastbereich der Verbraucher verwendbar.

Eine Verwendung einer erfindungsgemäßen Schaltungsanordnung erfolgt mit Vorteil zur Energieversorgung mehrerer dezentraler Verbraucher. Hierbei kann es sich insbesondere um Motoren von Kommissioniereinheiten in einem Warenlager handeln.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 ein grundlegendes Prinzip einer erfindungsgemäßen Schaltungsanordnung;
Fig. 2 ein weiteres Prinzip einer erfindungsgemäßen Schaltungsanordnung;
Fig. 3 ein Bussystem einer erfindungsgemäßen Schaltungsanordnung;
Fig. 4 ein Ausführungsbeispiel einer erfindungsgemäßen Schaltungsanordnung;
Fig. 5 ein weiteres Ausführungsbeispiel einer erfindungsgemäßen Schaltungsanordnung.

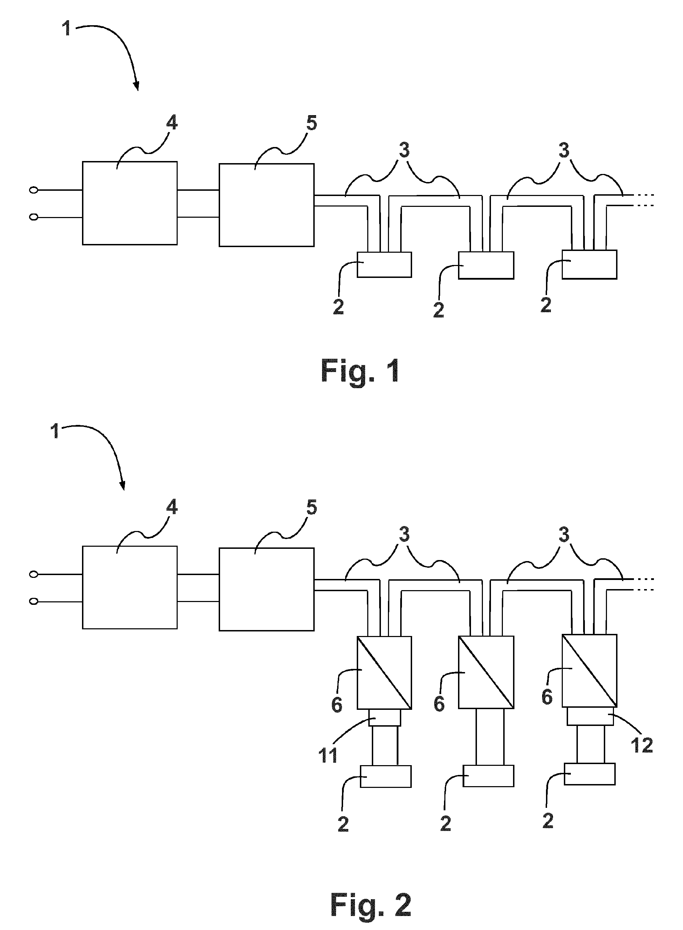

Fig. 1 zeigt eine schematische Darstellung eines grundlegenden Prinzips einer erfindungsgemäßen Schaltungsanordnung 1. Ein Gleichrichter 4 entnimmt Wechselspannung aus dem Stromnetz, welche in Europa üblicherweise 230 V beträgt. Als Netzfrequenz sind in Europa 50 Hz gebräuchlich. Neben der Spannungsentnahme aus dem Netz wandelt der Gleichrichter 4 diese auch in Gleichspannung um.

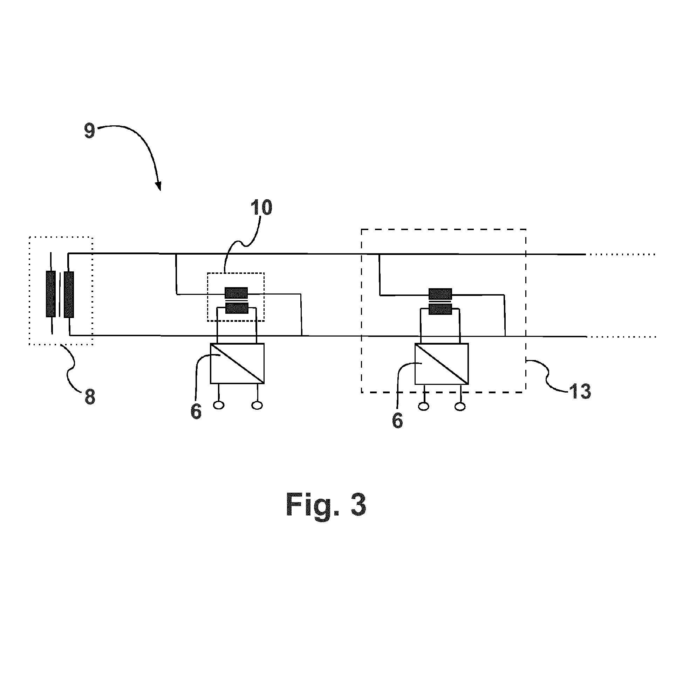

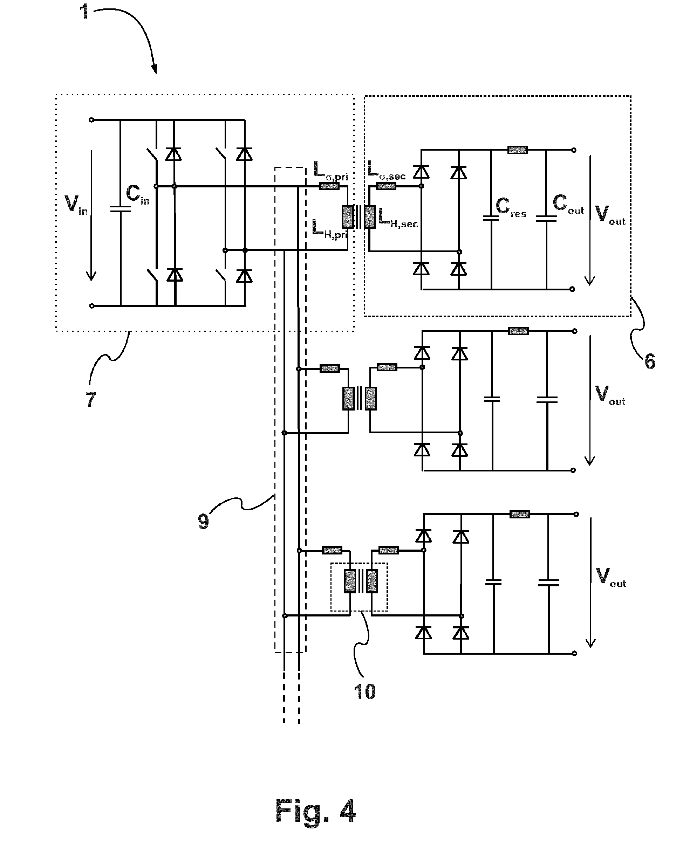

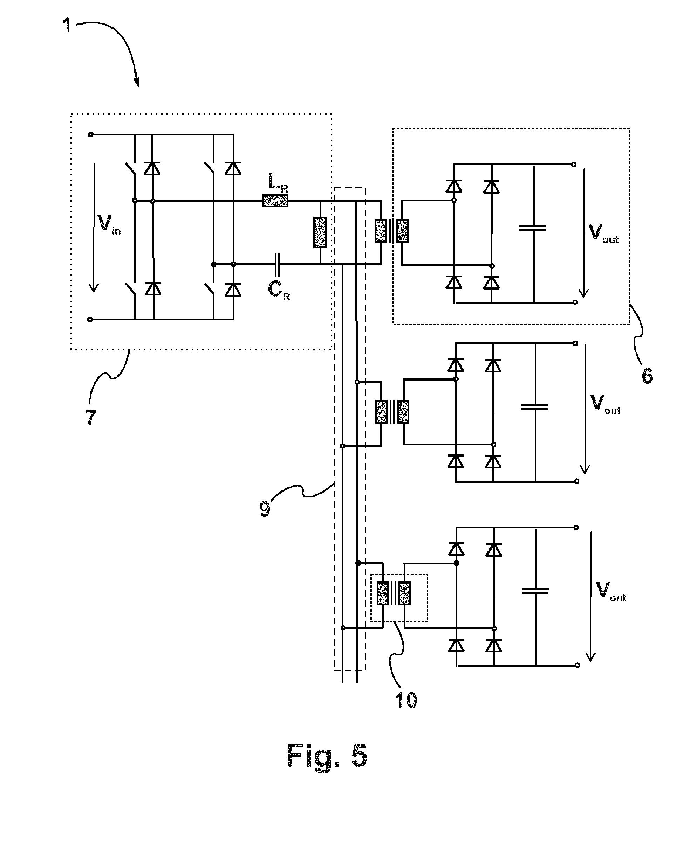

Erfindungsgemäß kann die Gleichspannung nach dem Gleichrichter 4 beispielsweise zwischen 350 V und 400 V betragen. An den Gleichrichter 4 schließt ein Mittel zur Frequenzänderung 5 an, welches bevorzugt wie in den noch zu erläuternden Fig. 4 und 5 dargestellt als Resonanzwandler 7 ausgebildet ist bzw. Resonanzkreise umfasst. Im Resonanzwandler 7 wird die Gleichspannung in eine Wechselspannung mit bevorzugt hoher Frequenz z. B. in einen Bereich von 20 kHz bis einigen 100 kHz z. B. 500 kHz umgewandelt. An das Mittel zur Frequenzänderung 5 schließt zumindest ein leitendes Übertragungsmittel 3 an, bevorzugt ein wie in der noch zu erläuternden Fig. 3 dargestelltes Bussystem 9, an welches mehrere Verbraucher 2 anschließbar sind.

Erfindungsgemäß ist dabei vorgesehen, dass das leitende Übertragungsmittel 3 bzw. die Kabel des Bussystems 9 zumindest teilweise verlegt sind. Die Verlegungsart der leitenden Übertragungsmittel 3 ist dabei davon abhängig, in welchem Bereich die Schaltungsanordnung 1 verwendet wird. Beispielsweise können die leitenden Übertragungsmittel 3 in Beton, im Boden oder in baulichen Hohlräumen verlegt sein. Die Verbraucher 2 können in einer Schaltungsanordnung 1 nach der Fig. 1 z. B. als ein- oder dreiphasige Verbraucher 2 bzw. als Gleichspannungsverbraucher ausgeführt sein.

Fig. 2 zeigt ein weiteres Prinzip einer erfindungsgemäßen Schaltungsanordnung 1. In dieser sind mehrere Mittel zum Auskoppeln 6 von Spannung vorgesehen, welche an das leitende Übertragungsmittel 3 angeschlossen sind. Die Mittel zum Auskoppeln 6 von Spannung sind voneinander sowie vom Gleichrichter 4 beabstandet angeordnet und können je einen in Fig. 1 nicht dargestellten ausgangsseitigen Gleichrichter 11 oder je einen ausgangsseitigen Umrichter 12 umfassen, welche die Wechselspannung vor einem Ausgang aus je einem Mittel zum Auskoppeln 6 von Spannung entweder wieder gleichrichten oder in ein- oder mehrphasige Wechselspannung mit unterschiedlicher Frequenz und/oder Amplitude umwandeln. In Fig. 2 umfasst ein Mittel zum Auskoppeln 6 von Spannung einen Gleichrichter 11 und eines einen Umrichter 12. Ein weiteres Mittel zum Auskoppeln 6 von Spannung überträgt diese direkt an den Verbraucher 2. Eine Anordnung der Gleichrichter 11 bzw. Umrichter 12 ist von den Verbrauchern 2 abhängig und kann dementsprechend gewählt werden. An jedes Mittel zum Auskoppeln 6 von Spannung bzw. am Gleichrichter 11 oder Umrichter 12 ist ein Verbraucher 2 anschließbar, wobei eine Last jedes Verbrauchers 2 unterschiedlich groß sein kann. Die Verbraucher 2 können als jeweils verschiedene Verbraucher 2, wie z. B. als Gleichstrommotoren oder ein- oder mehrphasige Verbraucher 2 ausgebildet sein. Eine Ansteuerung der Verbraucher 2 mit unterschiedlichen Lasten erfolgt über den Resonanzwandler 7. Mit der erfindungsgemäßen Schaltungsanordnung 1 sind Verbraucher 2 versorgbar, welche 100 m oder mehr vom Gleichrichter 4 zur Spannungsentnahme aus dem Netz beabstandet angeordnet sind.

Fig. 3 zeigt das Bussystem 9 mit Mitteln zum Auskoppeln 6 von Spannung einer erfindungsgemäßen Schaltungsanordnung 1. Spannung kann über einen Übertrager 8, welcher als Transformator ausgebildet sein kann, aus dem nicht dargestellten Mittel zur Frequenzänderung 5, bevorzugt dem Resonanzwandler 7 ausgekoppelt und über Kabel des Bussystems 9 weitergeleitet werden. Der Übertrager 8 ermöglicht ein annähernd potenzialfreies Auskoppeln von Spannung und eine Durchführung desselben annähernd ohne Verlust von elektrischer Energie. Aufgrund der durch den Resonanzwandler 7 erzeugten Mittelfrequenzen ist der Übertrager 8 klein und leicht ausgebildet. An die Kabel des Bussystems 9 sind mehrere Mittel zum Auskoppeln 6 von Spannung anordenbar. Eine Auskopplung der Spannung erfolgt dabei möglichst potenzialfrei z. B. über Transformatoren 10, welche wiederum aufgrund der Mittelfrequenzen bevorzugt klein und leicht ausgebildet sind. Ein Bussystem 9 kann dabei beliebig viele voneinander beabstandete Energieauskopplungsmodule 13 umfassen, welche je einen Transformator 10, Kabel und Mittel zum Auskoppeln 6 von Spannung umfassen können.

Das Bussystem 9 ist beispielsweise durch Schraub- oder Klemmverbindungen der Energieauskopplungsmodule 13 aufbaubar. An die Mittel zum Auskoppeln 6 von Spannung sind dabei Verbraucher 2 mit unterschiedlichen Lasten anschließbar. Aufgrund der hohen Spannung können die Kabel des Bussystems 9 über 100 m lang ausgebildet sein, ohne dabei wesentlich an elektrischer Energie zu verlieren. Erfindungsgemäß kann auch ein Auskoppeln von Spannung ohne Transformatoren 10 bzw. Übertrager 8 vorgesehen sein.

Fig. 4 zeigt ein Ausführungsbeispiel einer erfindungsgemäßen Schaltungsanordnung 1. An einer Primärseite gelangt eine mit dem nicht dargestellten Gleichrichter 4 bereits gleichgerichtete Spannung von beispielsweise 400 V in den Resonanzwandler 7. Der Resonanzwandler 7 umfasst mehrere steuerbare elektronische Schalter wie beispielsweise Transistoren sowie einen Kondensator. Der Resonanzwandler 7 wandelt dabei die Gleichspannung in Wechselspannung mit Mittelfrequenzen um, welche über das Bussystem 9 auskoppelbar ist. Am Bussystem 9 ist der Spannungsverlauf rechteckförmig und der Stromverlauf sinusförmig. Auf einer Sekundärseite sind am Bussystem 9 mehrere voneinander beabstandete Mittel zum Auskoppeln 6 von Spannung angeordnet, welche in diesem Ausführungsbeispiel je einen ausgangsseitigen Gleichrichter 11 umfassen. Einen Übergang von der Primär- zur Sekundärseite können Transformatoren 10 bilden. Der Resonanzwandler 7 bildet zusammen mit diesen Transformatoren 10, den Induktivitäten und den Kondensatoren auf der Primär- und Sekundärseite einen Schwingkreis, welcher immer nur im Resonanzpunkt betrieben wird, d. h. dass die Frequenz möglichst konstant gehalten wird. Erfindungsgemäß kann wieder vorgesehen sein, dass Spannung ohne Transformatoren 10 aus dem Resonanzwandler 7 auskoppelbar ist. Diese Ausführungsform ist insbesondere bei einer Versorgung eines dreiphasigen Verbrauchers 2 wie eines dreiphasigen Motors zweckmäßig. Sind die Lasten der Verbraucher 2 unterschiedlich groß, dann sind diese Unterschiede durch entsprechend angepasste Stromamplituden ausgleichbar. Die Resonanzfrequenz wird durch ein Parallelschalten von mehreren Mitteln zum Auskoppeln 6 von Spannung nicht verändert, da die Kondensatorwerte um einen Faktor erhöht und die Induktivitätswerte um denselben Faktor verringert werden. Voraussetzung dafür ist, dass der Kondensator auf der Primärseite größer ausgebildet ist als dieser am Ausgang der Sekundärseite.

Fig. 5 zeigt ein weiteres Ausführungsbeispiel einer erfindungsgemäßen Schaltungsanordnung 1. Auf der Primärseite der Schaltung ist dabei wiederum der Resonanzwandler 7 angeordnet, welcher auf einer LLC-Topologie basiert und demnach neben mehreren elektronischen Schaltern zwei Induktivitäten und einen Kondensator umfasst. Eine Funktionsweise dieses LLC-Resonanzwandlers beruht darauf, dass ein Übertragungsverhältnis von Ausgangs- und Eingangsspannung durch Anpassen der Frequenz an unterschiedliche Lastzustände konstant gehalten wird. Somit sind auch bei diesem Ausführungsbeispiel einer Schaltungsanordnung 1 mehrere Verbraucher 2 mit unterschiedlichen Lasten ansteuerbar. An den Resonanzwandler 7 schließt wiederum primärseitig das Bussystem 9 an, welches über Transformatoren 10 zu den Mitteln zum Auskoppeln 6 von Spannung verbunden werden kann. Insbesondere bei einer direkten Versorgung eines dreiphasigen Verbrauchers 2 kann wiederum ohne Transformatoren 10 gearbeitet werden.

Bei beiden Ausführungsbeispielen der erfindungsgemäßen Schaltungsanordnung 1 scheint es notwendig zu sein, falls Übertrager 8 bzw. Transformatoren 10 vorgesehen sind, dass diese derart ausgebildet sind, dass deren Streureaktanz sehr gering ist. Es müssen also die induktiven Spannungsfälle gering gehalten werden. Bauteile, welche diese Voraussetzungen erfüllen, sind beispielsweise mit auf Ferrit basierenden oder amorphen Kernen realisierbar. Voraussetzung dafür ist, dass eine freie Fläche zwischen den Wicklungen der Übertrager 8 bzw. Transistoren 10 so gering wie möglich gehalten wird.

Weiter scheint es günstig bei längeren Strecken der leitenden Übertragungsmittel 3 dazu niederinduktive Kabel zu verwenden, um zusätzliche, störende Induktivitäten zu verringern. Nützlich ist es dazu auch, dass die Resonanzfrequenz niedrig gehalten wird, um Spannungstoleranzen einzuhalten.

Eine erfindungsgemäße Schaltungsanordnung 1 ist in mehreren Bereichen verwendbar wie beispielsweise im Bereich der Logistik. Im Logistikbereich ist es notwendig mehrere Verbraucher 2 mit Energie zu versorgen, wobei ein Lastbereich der Verbraucher 2 unterschiedlich groß sein kann, da es sich dabei z. B. um unterschiedliche Motoren oder auch Sensoren handeln kann. Als Verbraucher im Logistikbereich können z. B. autonom fahrende Kommissioniereinheiten in einem Warenlager vorgesehen sein. Eine weitere Verwendung betrifft beispielsweise Nutzfahrzeuge. Dabei kann vorgesehen sein, dass der Resonanzwandler 7 in einer Zugmaschine angeordnet ist und Energie bzw. Spannung zu Verbrauchern 2 überträgt, welche sowohl in der Zugmaschine als auch in mehreren Anhängern angeordnet sind. Denkbar sind weiter Verwendungsbereiche im Flugzeug- und Automobilbereich, um über ein Netzteil mehrere verschiedene Komponenten mit Energie zu versorgen.

## Patentansprüche

1. Schaltungsanordnung (1) zur Energieversorgung mehrerer Verbraucher (2), wobei diese voneinander beabstandet angeordnet sind, umfassend zumindest ein leitendes Übertragungsmittel (3), welches zumindest teilweise verlegt ist, **dadurch gekennzeichnet, dass** ein Gleichrichter (4) zur Entnahme von Spannung aus dem Netz und zum Gleichrichten derselben und ein Mittel zur Frequenzänderung (5) von Spannung vorgesehen sind, wobei das zumindest eine leitende Übertragungsmittel (3) zwischen dem Mittel zur Frequenzänderung (5) und den Verbrauchern (2) überträgt.

2. Schaltungsanordnung (1) nach Anspruch 1, **dadurch gekennzeichnet, dass** mehrere Mittel zum Auskoppeln (6) von Spannung vorgesehen sind, wobei an jedem Mittel zum Auskoppeln (6) von Spannung einer der Verbraucher (2) anschließbar ist, wobei das leitende Übertragungsmittel (3) zwischen dem Mittel zur Frequenzänderung (5) und den Mitteln zum Auskoppeln (6) von Spannung überträgt.

3. Schaltungsanordnung (1) nach Anspruch 1 oder 2, **dadurch gekennzeichnet, dass** ein Abstand von zumindest zwei Verbrauchern (2) um mindestens eine Größenordnung größer ist als zumindest ein Verbraucher (2) selbst.

4. Schaltungsanordnung (1) nach einem der Ansprüche 1 bis 3, **dadurch gekennzeichnet, dass** ein Resonanzwandler (7) zur Frequenzänderung vorgesehen ist, welcher die Frequenz bevorzugt in Mittelfrequenz erhöht.

5. Schaltungsanordnung (1) nach Anspruch 4, **dadurch gekennzeichnet, dass** ein Übertrager (8) vorgesehen ist, welcher die Spannung aus dem Resonanzwandler (7) auskoppelt.

6. Schaltungsanordnung (1) nach Anspruch 4 oder 5, **dadurch gekennzeichnet, dass** Bauteile des Resonanzwandlers (7) bei einem Nulldurchgang des Stromes oder der Spannung schalten.

7. Schaltungsanordnung (1) nach Anspruch 5 oder 6, **dadurch gekennzeichnet, dass** ein Bussystem (9) als Übertragungsmittel (3) vorgesehen ist, welches an den Übertrager (8) anschließt, wobei Kabel des Bussystems (9) zumindest teilweise verlegt sind.

8. Schaltungsanordnung (1) nach Anspruch 7, **dadurch gekennzeichnet, dass** die Mittel zum Auskoppeln (6) von Spannung parallel zueinander am Bussystem (9) angeordnet, bevorzugt an dieses ansteckbar und über Transformatoren (10) verbunden sind.

9. Schaltungsanordnung (1) nach einem der Ansprüche 1 bis 8, **dadurch gekennzeichnet, dass** zumindest ein Mittel zum Auskoppeln (6) von Spannung einen ausgangsseitigen Gleichrichter (11) umfasst, wobei Bauteile des ausgangsseitigen Gleichrichters (11) bei einem Nulldurchgang des Stromes oder der Spannung schalten.

10. Schaltungsanordnung (1) nach einem der Ansprüche 1 bis 8, **dadurch gekennzeichnet, dass** zumindest ein Mittel zum Auskoppeln (6) von Spannung einen ausgangsseitigen Umrichter (12) umfasst.

11. Schaltungsanordnung (1) nach Anspruch 10, **dadurch gekennzeichnet, dass** Bauteile des ausgangsseitigen Umrichters (12) bei einem Nulldurchgang des Stromes oder der Spannung schalten.

12. Schaltungsanordnung (1) nach einem der Ansprüche 1 bis 11, **dadurch gekennzeichnet, dass** jeder Verbraucher (2) in einem eigenen Gehäuse angeordnet ist.

13. Schaltungsanordnung (1) nach einem der Ansprüche 1 bis 12, **dadurch gekennzeichnet, dass** zumindest an einem Mittel zum Auskoppeln (6) von Spannung ein Motor anschließt.

14. Schaltungsanordnung (1) nach einem der Ansprüche 1 bis 13, **dadurch gekennzeichnet, dass** die Last der Verbraucher (2) unterschiedlich groß ist.

15. Verwendung einer Schaltungsanordnung (1) nach einem der Ansprüche 1 bis 14 zur Energieversorgung mehrerer dezentraler Verbraucher (2).
